**Europäisches Patentamt**

**European Patent Office**

**Office européen des brevets**

(19)

(11) Publication number : **0 521 214 B1**

# (12) EUROPEAN PATENT SPECIFICATION

(45) Date of publication of patent specification :
**11.05.94 Bulletin 94/19**

(51) Int. Cl.⁵ : **B01J 2/10,** B01F 15/00,
A61J 3/00

(21) Application number : **91308525.4**

(22) Date of filing : **18.09.91**

(54) **Stirring and pelletizing apparatus.**

(30) Priority : **25.06.91 JP 152702/91**

(43) Date of publication of application :
**07.01.93 Bulletin 93/01**

(45) Publication of the grant of the patent :
**11.05.94 Bulletin 94/19**

(84) Designated Contracting States :
**CH DE FR GB IT LI**

(56) References cited :
**EP-A- 0 385 956
FR-A- 2 285 117**

(73) Proprietor : **KABUSHIKI KAISHA POWREX
3-11, Bingomachi 3-chome, Chuo-ku
Osaka-shi, Osaka-fu (JP)**

(72) Inventor : **Sakamoto, Hiroshi
Tsujino 1455-ban 5-gou
Sakai-shi, Osaka-fu (JP)**
Inventor : **Inoue, Katsuhiro
10-302, Shinashiya-ue 19-ban
Suita-shi, Osaka-fu (JP)**
Inventor : **Kasuya, Kenichi
103, Toshima 7-chome 8-ban 10-gou, Kita-ku
Tokyo-to (JP)**

(74) Representative : **Tillbrook, Christopher John
Chris J Tillbrook & Co 5 Old Rectory Close
Churchover
Rugby, Warwickshire CV23 0EN (GB)**

## Description

The present invention relates to a stirring and pelletizing apparatus used for mixing and pelletizing powder particles in the medical, food and other industries where the processing of powder particles is required.

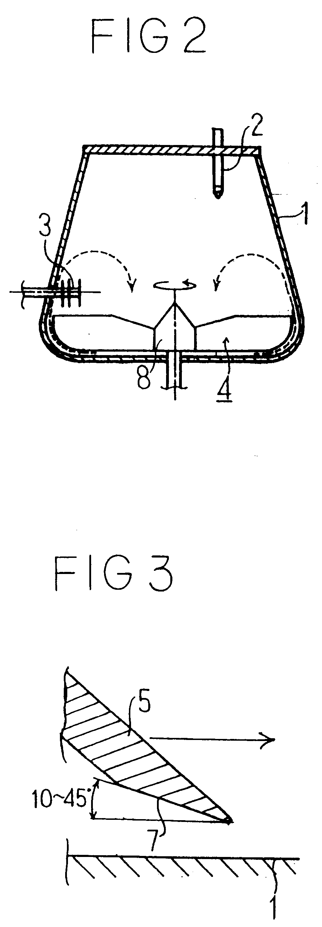

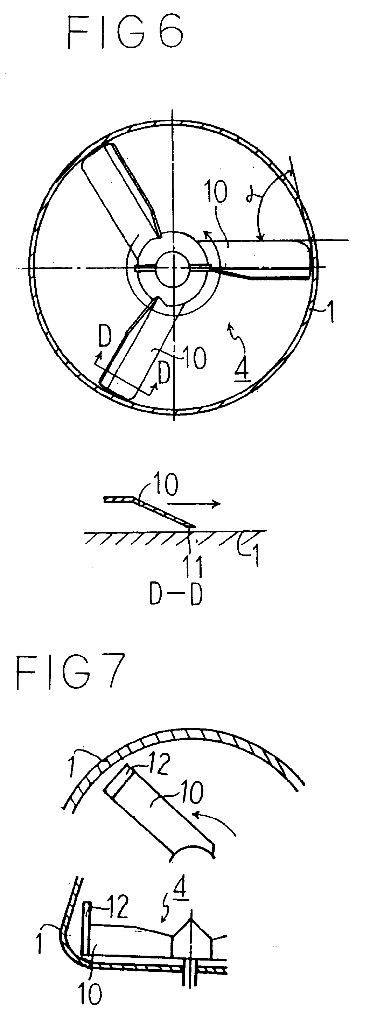

A stirring and pelletizing apparatus for mixing and pelletizing powder particles, as shown in Fig. 2, comprises a treating vessel 1 in which a nozzle 2, a chopper 3, and a rotary member 4 are disposed. The rotary member 4, as shown in a plan view in Fig. 6, is composed of a plurality of stirring vanes 10 radially attached to the rotary shaft to downwardly slope in the direction of rotation.

In the above arrangement, when the rotary member is rotated, a raw material, or powder, charged in the treating vessel 1 is also rotated as it is thrown upward by the stirring vanes 10. As a result, upward thrust and centrifugal force act on the powder particles, causing the latter to repeat the stirring movement as shown in dotted lines while revolving on the wall surface of the treating vessel 1. During this, a binder is trickled or sprayed from the nozzle 2, so that the powder particles moderately cohere as they are stirred, resulting in the formation of pellets having a desired particle size. In addition, the masses produced during pelletizing are crushed by the rotating chopper 3.

In this manner, the raw material powder charged into the treating vessel is stirred by combination of rolling pelletizing action by the rotary member 4 and crushing pelletizing action by the chopper 3 and thereby formed into pellets of desired particle size.

In the above stirring and pelletizing apparatus, the powder particles are subjected to centrifugal force with the rotation of the rotary member, and this centrifugal force causes the powder particles to move radially to collide with the inner lateral surface of the treating vessel. In the above pelletizing step, the raw material powder is always wet because of the addition of the liquid binder. When such wet powder particles collide with the inner lateral surface of the treating vessel, they stick to the wall surface rather than moving upward, and as a result of repetitive occurrence of this phenomenon, a layer-like agglutinate is formed on the inner lateral surface of the treating vessel. At this time, as shown in Fig. 6, since the angle $\alpha$ between the inner lateral surface of the treating vessel 1 and the front end edge of the stirring vane 10 is somewhat less than 90°, said layer-like agglutinate is pressed against the inner lateral surface by the lower end edge 11 of the stirring vane 10. This means that the agglutinate more firmly adheres to the inner lateral surface of the treating vessel 1.

Further, the formation of such agglutinate impedes the smooth stirring movement of the powder particles, worsening the flow of the powder particles. As a result, the following powder particles lying on and adjacent the bottom of the treating vessel stagnate on the bottom surface of the treating vessel. When the stirring vanes pass over these stagnant powder particles, the latter are pressed hard against the bottom surface of the treating vessel by the lower end edges 11 of the stirring vanes 10, until the powder particles stick to the bottom surface of the treating vessel 1.

In the conventional stirring and pelletizing apparatus, since a large amount of agglutinate collects on the inner lateral and bottom surfaces of the treating vessel, as described above, the yield of pellets of desired particle size decreases and it becomes necessary to peel the agglutinate from the wall surface, leading to a decrease in the production efficiency.

To solve these problems, it has been common practice to lower the rpm of the rotary member to decrease the centrifugal force, or, as shown in Fig. 7, a vertical member 12 is mounted on the front end of the stirring vane 10 to decrease the formation of an agglutinate on the inner lateral surface of the treating vessel 1. However, in the former approach, the lower rpm of the rotary member decreases the efficiency of production, while the latter approach does not positively impart upward thrust to the powder particles and hence the stirring movement of the powder particles is not smoothly effected, resulting in poor pelletization and hence low efficiency of production of pellets.

With the above in mind, the present invention has for its object the provision of a stirring and pelletizing apparatus which decreases the formation of agglutinate on the inner lateral and bottom surfaces of a treating vessel, thereby increasing the yield of pellets and hence the efficiency of pelletizing operation.

## SUMMARY OF THE INVENTION

According to the invention, a stirring and pelletizing apparatus for stirring and pelletizing powder particles fed into a treating vessel by the rotation of a rotary member with a plurality of stirring vanes mounted thereon to downwardly slope in the direction of rotation is characterized in that the front ends of the stirring vanes are disposed ahead of the base ends as viewed in the direction of rotation.

The above arrangement makes the angle between the inner lateral surface of the treating vessel and the front end edge of the front end greater than 90°. Therefore, the outer peripheral surface of the front end acts to scrape the agglutinate formed on the inner lateral surface of the treating vessel. Further, the particles circumferentially moved under the influence of centrifugal force are readily given upward thrust as they are guided by the front ends of the stirring vanes, moving upward without colliding with the inner lateral surface of the treating vessel. Therefore, the amount of agglutinate produced on the inner lateral surface of the treating vessel is minimized.

The invention greatly decreases the formation of agglutinate on the inner lateral and bottom surface of the treating vessel. Therefore, it becomes possible to increase the yield of pellets and to facilitate the operation of peeling the agglutinate. In this respect, the efficiency of pelletizing operation can be further increased.

BRIEF DESCRIPTION OF THE DRAWINGS

Fig. 1 is a plan view, in section, of a stirring and pelletizing apparatus according to the present invention and a sectional view taken along the line C-C of a stirring vane;
Fig. 2 is a side view, in sectional, of the stirring and pelletizing apparatus;
Fig. 3 is an enlarged sectional view of the main portion of the stirring vane;
Fig. 4 is a plan view, in section, showing another embodiment of the shape of the stirring vanes;
Fig. 5 is a side view showing vanes mounted on a base;
Fig. 6 is a plan view, in section, of a conventional stirring and pelletizing apparatus an a sectional view of a stirring vane; and
Fig. 7 is a plan view and a side view, in section, of the conventional stirring and pelletizing apparatus.

DESCRIPTION OF THE PREFERRED EMBODIMENTS

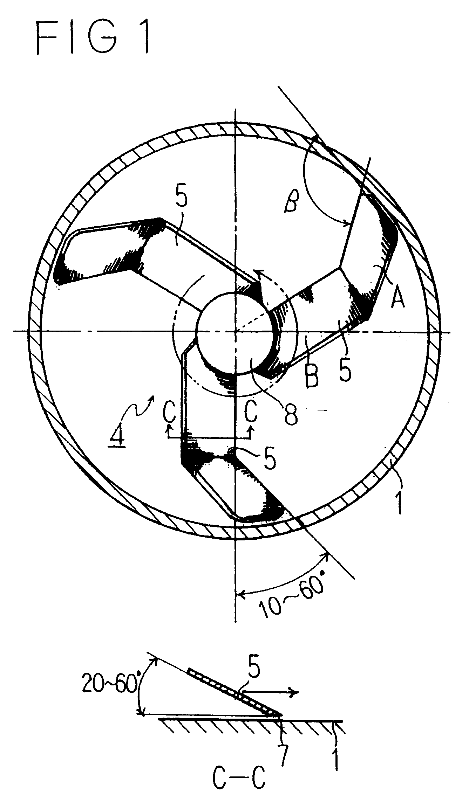

Embodiments of the invention will now be described with reference to Figs. 1 through 5.

A stirring and pelletizing apparatus shown in Fig. 2 comprises a substantially cylindrical treating chamber 1 with its diameter gradually decreased toward the top, in which there are disposed a nozzle 2 for trickling or spraying a binder, a chopper 3 and a rotary member 4.

The rotary member 4, as shown in Fig. 1, comprises a base 8 on which are radially mounted a plurality of stirring vanes 5 downwardly sloping at an angle of about 20 to 60°. Each stirring vane 5 is formed with a front end A disposed at about 2/3 - 3/4 of the distance from the center to the tip, said front end being disposed about 10 - 60 degrees ahead as viewed in the direction of rotation. As a result, the angle $\beta$ between the between the inner lateral surface of the treating vessel 1 and the front end edge of the front end A becomes greater than 90° ($\beta > 90°$). In addition, the lower end edge of the front end A and the lower end edge of the base end B not disposed ahead are in the same plane as that of the lower end edge 7 shown in Fig. 1 and their downward slope are also at the same angle.

In the above arrangement, after a raw material powder consisting of several ingredients is charged into the treating vessel 1 and the latter is closed, the rotary member 4 is rotated, whereby the powder particles are subjected to upward thrust and centrifugal force to exercise a stirring movement shown in dotted lines in Fig. 2. As a binder is trickled or sprayed from the nozzle 2, the raw material powder is pelletized.

The powder particles which are radially moved under the influence of the centrifugal force stick to the inner lateral surface of th treating vessel 1 in layer form. At this time, since the relation $\beta > 90°$ has been established, the outer peripheral portions of the front ends A act to scrape said agglutinate. Further, since the front ends A of the stirring vanes 5 are disposed ahead of the base end B as viewed in the direction of rotation, the powder particles are smoothly thrusted upward as they are guided by the front ends A. And the powder particles are moved upward without colliding with the inner lateral surface of the treating vessel 1, smoothly performing a stirring movement shown in Fig. 2. Therefore, because of the two points described above, the amount of agglutination of powder particles on the inner lateral surface of the treating vessel 1 can be decreased.

Further, since the amount of agglutination of powder particles on the inner lateral surface of the treating vessel 1 is decreased, the stirring movement is smooth, with almost no powder particles staying on the bottom surface of the treating vessel 1; therefore, the amount of powder particles pressed by the lower end edges 7 of the stirring vanes 5 to be agglutinated on the bottom surface of the treating vessel 1 is also decreased.

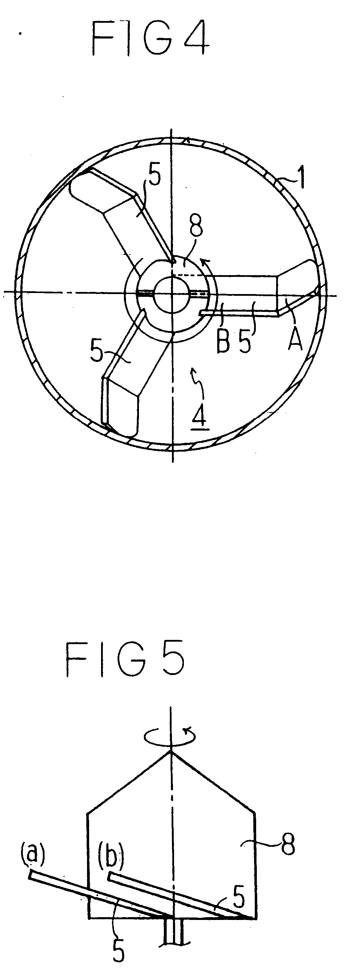

In addition, the lower end edge 7 of the stirring vane 5, rather than being parallel with the bottom surface of the treating vessel 1, may be cut at an angle of about 10 - 45°, as shown in Fig. 3, so that the portion disposed ahead as viewed in the direction of rotation is thin. With this arrangement, the period of time during which the powder particles staying on the bottom surface of the treating vessel 1 is pressed by the lower end edges 7 of the stirring vanes 5 is shortened, so that the amount of powder particles agglutinated on the bottom surface of the treating vessel 1 is decreased. Further, the stirring vane is shown in Fig. 1 shaped such that the center of rotation is located on the extension of the front end edge of the base end B; however, it may be shaped as shown in Fig. 4 such that the center of rotation is disposed behind the extension of the front end edge of the base end B. When the stirring vane a shown in Fig. 1 is compared with the stirring vane b shown in Fig. 4 with respect to the bonded state between the stirring vane and the base 8, it is seen that as shown in Fig. 5, a is greater than b in the bonding area between the stirring vane 5 and the base 8. Therefore, the bonding strength between the stirring vane is greater for the stirring vane 5 shown in Fig. 4 than for the one shown in Fig. 1.

Further, by suitably changing the size of the front end A of the stirring vane 5, it is possible for the powder particles to obtain the upward thrust suitable for the pelletizing conditions.

To ascertain the effects of the present invention, comparison experiments were made between the conventional stirring vane (see Fig. 6) and the stirring vane 4 having the aforesaid front end A as to the amount of agglutinate and the yield of pellets. The experiments were made using a powder raw material consisting of 29% acetaminophen, 47% lactose, 20% cornstarch and 4% avicel, and 800 g of binding agent consisting of a 5.0% solution of HPC-LEP, lasting for 12 minutes. And pellets having a particle diameter of 30 - 200 mesh. The results of the experiments are shown below.

|  | conventional vane 300 RPM | improved vane 300 RPM | conventional vane 400 RPM | improved vane 400 RPM |
|---|---|---|---|---|
| average particle diameter | 127 $\mu$m | 162 $\mu$m | 145 $\mu$m | 178 $\mu$m |
| amount remaining in vessel | 751 g | 120 g | 830 g | 110 g |
| amount of aggluti- nate | 525 g | 48 g | 714 g | 65 g |
| yield of pellets | 71.5% | 89.5% | 78.5% | 91.5% |
| overall yield | 62.2% | 87.6% | 67.3 % | 89.8% |

Amount remaining in vessel:
the amount that remained in the treating vessel as a result of natural discharge of pellets caused by opening the discharge port while stirring;
Amount of agglutinate:
the amount of the remaining substance agglutinated in the treating vessel that is scraped off and forcibly discharged;
Yield of pellets:
the proportion of pellets whose particle size is 30 - 200 mesh included in naturally discharged pellets;
Overall yield:
the proportion of pellets whose particle size is 30 - 200 mesh included in the sum of naturally discharged pellets and forcibly discharged pellets.

Thus, in both cases of 300 RPM and 400 RPM, the stirring vane according to the present invention (improved stirring vane) is much less in the amount remaining in the vessel and also in the amount of agglutinate and hence increases the yield of pellets.

## Claims

1.  A stirring and pelletizing apparatus for stirring and pelletizing powder particles fed into a treating vessel by the rotation of a rotary member with a plurality of stirring vanes mounted thereon to downwardly slope in the direction of rotation,

said stirring and pelletizing apparatus being characterized in that the front ends of the stirring vanes are disposed ahead of the base ends as viewed in the direction of rotation.

## Patentansprüche

1.  Rühr- und Tablettierapparat zum Rühren und Tablettieren in ein Behandlungsgefäß eingeführter Pulverteilchen durch die Umdrehung eines Drehglieds mit einer Mehrzahl daran mit Abwärtsneigung in Drehrichtung angebrachter Rührflügel, dadurch gekennzeichnet, daß die Vorderenden der Rührflügel mit Blick in Drehrichtung vor den Basisenden angeordnet sind.

## Revendications

1.  Appareil mélangeur et granulateur pour mélanger et granuler des particules de poudre alimentées dans une cuve de traitement par la rotation d'un organe rotatif ayant une pluralité de pales mélangeuses montées sur celui-ci de manière à être inclinées vers le bas dans le sens de la rotation,

ledit appareil mélangeur et granulateur étant caractérisé en ce que les extrémités avant des pales mélangeuses sont disposées en avant des extrémités côté support, vu dans le sens de rotation.

FIG 1

C—C

# FIG 2

# FIG 3

10~45°

# FIG 4

# FIG 5

# FIG 6

D—D

# FIG 7